# EUROPEAN PATENT SPECIFICATION

(11) **EP 1 283 947 B1**
(45) Date of publication and mention of the grant of the patent: **06.09.2006**
(21) Application number: 01931864.1
(22) Date of filing: 21.05.2001
(51) Int. Cl.: F01N 3/08, F01N 3/20, F01N 3/22

(54) **METHOD OF TREATING GASOLINE EXHAUST GASES**
VERFAHREN ZUR BEHANDLUNG VON ABGASEN EINES BENZINMOTORS
PROCEDE DE TRAITEMENT DES GAZ D'ECHAPPEMENT DE MOTEUR A ESSENCE

(30) Priority: 24.05.2000 GB 0012424
(43) Date of publication of application: 19.02.2003
(73) Proprietor: JOHNSON MATTHEY PUBLIC LIMITED COMPANY, London SW1Y 5BQ (GB)
(72) Inventor: TWIGG, Martyn Vincent, Cambridge CB3 8PQ (GB)
(74) Representative: Nunn, Andrew Dominic
(86) International application number: PCT/GB2001/002199
(87) International publication number: WO 2001/090541

(56) References cited:
- EP-A- 0 561 311
- EP-A- 0 995 886
- DE-A- 19 850 373
- US-A- 5 685 145

## Description

The present invention relates to a method of treating exhaust gases from a gasoline engine after cold-start using an exhaust gas aftertreatment system and more particularly to a method of operating an exhaust gas aftertreatment system comprising a hydrocarbon trap, a downstream secondary air injection point, means for supplying heated ambient air to the secondary air injection point and a three-way catalyst downstream of the point of secondary air injection.

The regulated emissions from gasoline-fuelled internal combustion engines are reduced by a variety of exhaust gas aftertreatment devices, including frequently, a hydrocarbon trap (e.g. effective to trap unburnt hydrocarbons ("HC") in the exhaust gas in a zeolite below a certain temperature, and desorb the HC above that temperature), and a three-way catalyst ("TWC") downstream of the trap. The TWC is effective, once it reaches the appropriate light-off temperature, to cause oxidation of HC, oxidation of CO and simultaneous reduction of NOₓ to N₂. Known TWC's have a relatively high light-off temperature for HC oxidation, so the purpose of the HC trap is to delay the HC reaching the TWC until it has reached light-off temperature. This has not been wholly successful in many systems causing HC to pass through the TWC unreacted in the period immediately following start-up.

A variety of prior art methods have been suggested (and some adopted) to assist the TWC to reach HC light-off temperature, including improved CO oxidation on the TWC thereby to use the exotherm to heat the catalyst to the HC light-off temperature, "EGI" (Exhaust Gas Ignition) and hydrogen-initiated light-off. Many systems use the addition of supplementary or secondary air into the exhaust gas downstream of the HC trap to provide improved oxidation conditions to speed TWC HC light-off.

Another system, is the Electrically Heated Catalyst ("EHC"), which can provide electric resistive heating to a catalyst in an exhaust gas treatment system. For example, the TWC can include an EHC to increase the temperature of the catalysts in order to achieve rapid HC light-off. However, in practice, EHC's have not been favoured by the automobile industry because they require too much power and this puts heavy demands on the vehicle battery. For example, if ambient temperatures fall below about 10°C (and winter temperatures well below this are met with regularly in parts of Europe and North America), the battery may be incapable of providing the necessary power to heat the catalyst sufficiently, with the result that the EHC is switched off Another reason why EHC's have not been widely adopted is that complicated heavy-duty connections to exhaust treatment components are required to cope with the high current. Furthermore, doubts have been raised about the durability of EHC's because they can be exposed to temperatures of about 1000°C, especially when there is a lot of exothermic reaction taking place on the TWC.

A prior art arrangement including secondary injection of heated air between an upstream HC trap and a downstream catalyst is described in WO 96/24756. In particular at Figure 2C there is shown an HC trap 28 and a catalyst 30 comprising a catalyst composition effective at least for the conversion of HC, an air pump 32, an air injection line 42' and an independently powered catalyst heating member 62- The catalyst-heating element 62 may comprise, for example, electric heating coils powered from the battery. From the above description it will be seen that this system suffers similar drawbacks to those of EHC's mentioned above.

An alternative to using battery power is described in US patent no 5,459,999. This discloses an exhaust gas cleaner system for an automotive internal combustion engine including an air introduction pipe for introducing secondary air, heated initially by a heater, to a catalytic converter unit mounted on the exhaust pipe. The document teaches that powering the heater from the engine alternator is undesirable because this puts a heavy load on the internal combustion engine which in turn leads to higher engine emissions.

We have now found that, very surprisingly, it is possible to obtain the benefit from heating the TWC with heated secondary air, without suffering from problems caused by excessive engine or battery load- In particular we have discovered that in one embodiment 1 hp, i.e. 750 W for about a minute is adequate to increase the temperature of the exhaust gas in an exhaust system by from 30 to 60°C.

The invention provides a method of operating a gasoline-fuelled engine having exhaust gas treatment including a cold-start procedure comprising the steps of (i) cranking the engine to self-propulsion; (ii) removing hydrocarbon (HC) adsorptively from the cool exhaust gas produced during initial self-propulsion; (iii) when, after initial self-propulsion, desorption of HC begins, supply hot air to the gas containing desorbed HC, whereby to heat the gas to a temperature at which a downstream three-way catalyst (TWC) will be active, and continuing the hot air supply until HC has become substantially desorbed; and (iv) feeding the resulting air-containing gas to the TWC, characterised by injecting air additionally into the exhaust gas shortly after leaving the engine and reacting the resulting mixture over a gas conversion catalyst; and between steps (iii) and (iv) contacting the gas with a low-light-off oxidation catalyst.

The invention also provides an exhaust system for a gasoline-fuelled engine, which system comprising, in order: adsorptive trap means capable of removing HC from the gas; means for hot air injection downstream of the trap; and a TWC and having engine management programmed for a cold start procedure comprising (i) cranking the engine to self-propulsion; (ii) removing HC adsorptively from the cool exhaust gas produced during initial self-propulsion; (iii) when, after initial self-propulsion, desorption of HC takes place, supplying hot air by way of the air injection means, whereby to heat the gas to a temperature at which the TWC will be active, and continuing the hot air supply until HC has become substantially desorbed; and (iv) feeding the resulting air-conditioning gas to the TWC, characterised in that the system further comprises means for additional air injection into the exhaust gas shortly after leaving the engine whereby the mixture consisting of the gas and the additional injected air reacts over a gas conversion catalyst; and the exhaust gas is further contacted with a low-light-off oxidation catalyst located between air-injection point (iii) and the TWC.

The invention provides further an engine including an exhaust gas treatment system according to the invention.

Suitably, the pre-heating means for the secondary air is a small electric resistance heater, which may provide from 500 to 1000W of power. The actual form of the heater is not critical. Alternatives to electric heating may be used. Conveniently, only a relatively small temperature rise in the secondary air has been found to be necessary, sufficient to increase the reduced-HC gas stream temperature by about 30 to 60°C Additionally, the method according to the invention can further comprise stopping the supply of heated air when the TWC is at or above HC light-off Temperature. The actual temperature and volume of the secondary air can be chosen by routine experiment, depending upon the actual engine, the specific aftertreatment system and, any specific low light-off catalyst.

It can readily be seen that according to the invention, the heating means is not included in the main exhaust system, with the result that it is not exposed to excessive temperatures and thus improved durability can be expected. Also, the invention requires only low quantities of power, with the result that electric heating is simple and inexpensive and can readily be incorporated without major redesign of the vehicle components. Such a heater unit can be compact and inexpensive and may be easily serviced or replaced.

Desirably, the heating means is controlled by a control system to switch on and off only when there is a requirement, as predetermined or, optionally, in response to sensed conditions.

An extremely significant feature of the present invention is that, unlike a "traditional" EHC concept, heating of the secondary air is not required before engine start-up. This completely removes the danger of discharging or damaging the battery and since power for heating is actually required only after engine start-up, the on-board generator (usually an alternator) is completely capable of providing adequate power. Thus, according to the invention, the method of operation is to begin to supply heated secondary air only when the HC trap begins to desorb HCs; this will vary according to the engine and exhaust system design and characteristics, the engine start-up conditions as determined by the engine management unit and the size and characteristics of the trap material, and may be determined by routine experiment in each case. Generally, however, it can be expected that most benefits from the present invention may be obtained by beginning to supply heated secondary air about 10 sec. after cranking the engine, and terminating the supply up to about a minute after cranking. Of course, such secondary air, whether or not heated, may be supplied at other times during engine operation, for example in response to operating conditions.

The means for operating the heated air supply may be operably associated with means for sensing the temperature of the HC trap and/or the TWC and optionally stops the supply of heated air when it is determined that the TWC is at or above HC light-off temperature.

The exhaust gas aftertreatment system of the invention is used with a close-coupled gas conversion ("GC") catalyst in conjunction with a first secondary air injection, for example into the exhaust manifold itself. Such GC catalysts and air injection are themselves known, although it is preferred that the GC catalyst is a high loading Pt catalyst, e.g. approx. 8.6 g/m³ (300 g/ft³ Pt), carried on a metallic substrate. The GC catalyst provides a first reduction of cold start emissions.

The TWC is preceded by a low-light-off catalyst which is conveniently a Pd containing catalyst carried on a metallic support. The low-light-off catalyst is suitably designed to exploit the chemical species generated by the GC catalyst, to light-off before there is any significant desorption ofHC from the HC trap. For example, it may comprise approx. 4.3 g/m³ (150 g/ft³) Pd on an approx 93 cells/cm² (600 cell per square inch, cpsi) in metallic substrate.

The TWC is suitably a conventional TWC. It may, for example, comprise a Pd/Rh catalyst carried at a loading of approx 4.3 g/m³ (150 g/ft³) on an approx. 124 cells/cm² (800 cpsi) metallic or ceramic substrate.

Desirably, the GC catalyst, low-light-off catalyst and TWC are supported on thin metal foil through-flow substrates. Suitable cell densities are in the range approx. 62 to 248 cells/cm² (400 to 1600 cpsi), preferably approx. 93-155 cells/cm² (600-1000 cpsi). These substrates, and the technology for coating the substrates with catalytic coatings, are themselves known.

Desirably, the engine management unit is adjusted or programmed to optimise the performance of the catalyst system according to the invention. Preferably, the engine includes a pre-catalyst HEGO (heated exhaust gas oxygen) sensor which feeds signals to the engine management unit to trim fuel supply, and preferably also includes an engine-out HEGO sensor located downstream of the first secondary air injection point.

Desirably, the system of the invention is optimised for the specific engine and exhaust system, and the engine management may suitably utilise a rich start strategy, for example to generate H₂ and/or CO to assist in early light-off If necessary, H₂ output can be boosted by using a catalyst that promotes the water gas shift reaction. In general, it is recommended to use excess fuel upon start up, combined with secondary air addition into the exhaust manifold and with spark retard.

In general, an effort should be made to avoid heat loss from the exhaust gases to the ambient, and it is preferred to insulate the exhaust pipes.

The invention is more particularly described with reference to the following working example. Reference is made also to the accompanying drawings, in which
Fig 1 is a schematic diagram of an engine and exhaust system according to the invention,
Fig 2 is a chart of exhaust gas temperature at various points in the system,
   and
Fig 3 is a chart ofHC concentrations at various points.

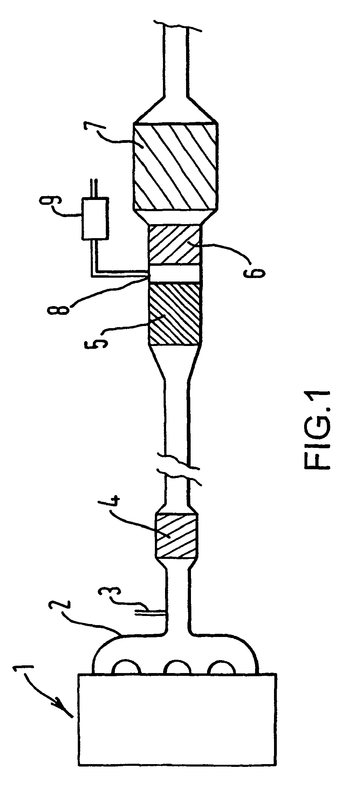

Referring to Fig 1, a modern 2-litre, 4-cylinder normally aspirated gasoline engine is shown generally by 1. The exhaust manifold, 2, has a first air injection point, 3, and a close-coupled GC catalyst, 4, mounted close to the manifold. The GC catalyst is in this example, a 0.6 litre volume metal support of approx. 93 cells/cm² (600 cpsi) carrying approx. 8.6 g/m³ (300 g/ft³) Pt catalyst. In the conventional underfloor position is mounted a conventional HC trap, 5, in close proximity to, and desirably in the same packaging or "can" as a low-light-off ("LLO") catalyst, 6, and a conventional TWC, 7. The HC trap is a 0.57 litre volume metal support of approx. 62 cells/cm² (400 cpsi) cell density, carrying a conventional zeolite trap material. The LLO catalyst is a 0.3 litre volume support of approx 93 cells/cm² (600 cpsi) cell density and carrying approx 4.3 g/m³ (150 g/ft³) Pd catalyst. The TWC is a 0.96 litre volume metal support of approx. 124 cells/cm² (800 cpsi) cell density, carrying approx. 4.3 g/m³ (150 g/ft³) of a Pd/Rh catalyst. A second secondary air injection point, 8, is located between the HC trap and the inlet of the LLO catalyst. Ambient air is taken by a conventional air pump (not shown) and passed through a canister, 9, containing a 700W wound-wire resistance controlled by the engine management unit (not shown) to start immediately upon engine start-up and to stop once light-off of the TWC has been achieved. Suitably air flow rates for the heated secondary air are of the order of 30 litres per min, for this engine Conventional silencers etc. (not shown) may be attached to the exhaust pipe, downstream of the catalyst system, as required.

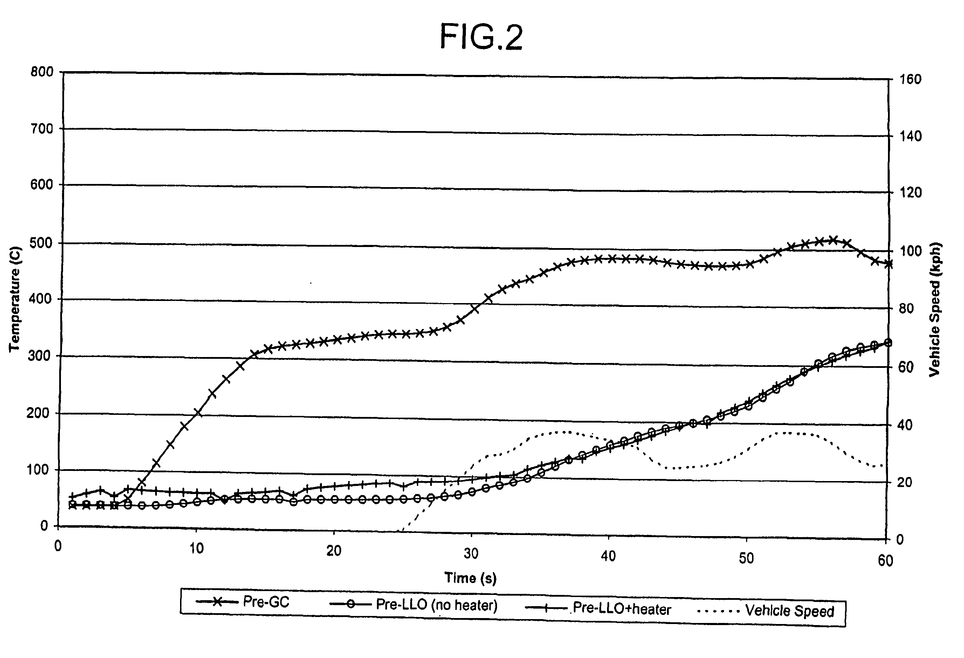

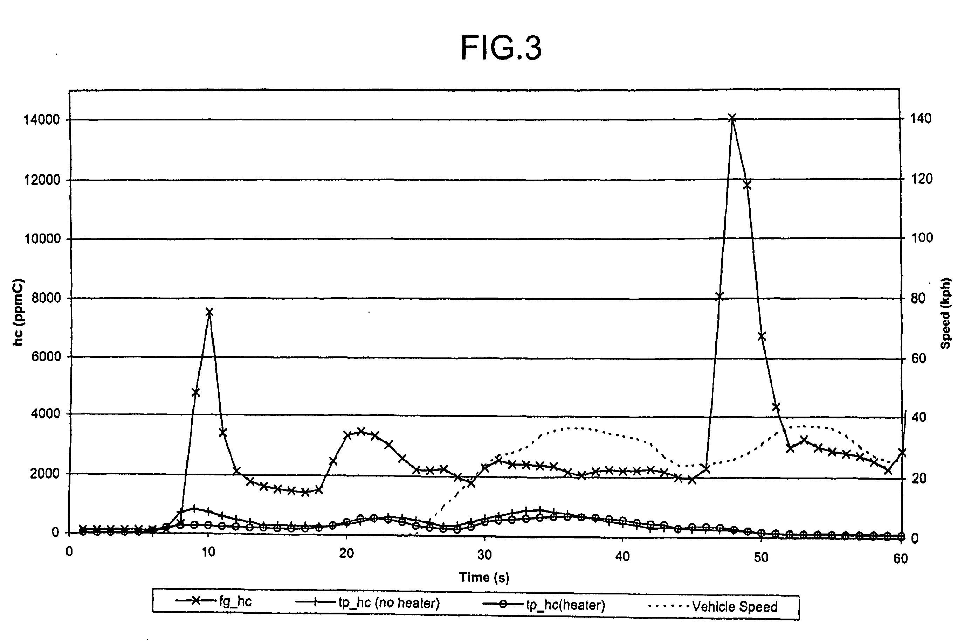

The engine was operated according to the US Federal FTP75 drive cycle. Reference is made to Figs 2 and 3 and especially the plots showing values without the secondary air heater operating. The rapid beating strategy causes a peak in engine-out hydrocarbons. The GC catalyst lights off in ten seconds and this causes a rapid decrease in the pre-HC trap HC concentrations. The HC trap itself absorbs most of the HC emissions during this time and hence the concentrations at the tail pipe are very low. The low-light-off catalyst also starts to operate early in the drive cycle, but the increase in tail pipe HC emissions show that some slippage occurring as the HC trap desorbs accumulated HC. This is due to the higher exhaust gas flow rates occurring in this section of the drive cycle, which stretches the performance of the low-light-off catalyst.

Reference is now made to the plots on Fig 3 showing values for HC concentration both with and without the secondary air heater operational. In the key to the plots, fg-hc refers to engine-out hydrocarbons (ppmC); tp-hc (no heater) and tp-hc (heater) refer to tailpipe hydrocarbons without the secondary air heater operating, and with the secondary heater operating, respectively. The most dramatic effect is during the peak in post-trap levels that occurs 10 seconds into the drive cycle, where the use of the heater assists the achievement of light-off of the low-light-off catalyst, greatly reducing tail pipe emissions. A smaller benefit is observed during the HC trap desorption peak at about 20 seconds. These two reductions are sufficient to reduce the tail pipe non-methane HC emissions from approx. 0.007 g/km to 0.005 g/km (0.011 g/mile to 0.008 g/mile), which achieves the SULEV (Super Ultra Low Emission Vehicle) standard.

## Claims

1. A method of operating a gasoline-fuelled engine (1) having exhaust gas treatment including a cold-start procedure comprising the steps of (i) cranking the engine (1) to self-propulsion, (ii) removing hydrocarbon (HC) adsorptively from the cool exhaust gas produced during initial self-propulsion; (iii) when, after initial self-propulsion, desorption of HC begins, supply hot air to the gas containing desorbed HC, whereby to heat the gas to a temperature at which a downstream three-way catalyst (TWC, 7) will be active, and continuing the hot air supply until HC has become substantially desorbed; and (iv) feeding the resulting air-containing gas to the TWC (7), **characterised by** injecting air additionally into the exhaust gas shortly after leaving the engine (1) and reacting the resulting mixture over a gas conversion catalyst (4); and between steps (iii) and (iv) contacting the gas with a low-light-off oxidation catalyst (6).

2. A method according to claim 1, wherein the supply of heated air is sufficient to increase the temperature of the exhaust gases contacting the TWC (7) by from 30 to 60°C.

3. A method according to claim 1 or 2, further comprising stopping the supply of heated air when the TWC (7) is at or above HC light-off temperature.

4. A method according to any preceding claim, further comprising only heating the supplied air to produce hot air after the engine (1) has been started.

5. A method according to any preceding claim, further comprising beginning step (iii) about 10 seconds after cranking and/or ending step (iii) at up to one minute after cranking.

6. A method according to any preceding claim, further comprising starting the engine (1) with excess fuel and spark retard and making the additional air injection into the engine exhaust manifold (2).

7. An exhaust system for a gasoline-fuelled engine (1), which system comprising, in order: adsorptive trap means (5) capable of removing HC from the gas; means for hot air injection (8) downstream of the trap (5); and a three-way catalyst (TWC, 7) and having engine management programmed for a cold start procedure comprising (i) cranking the engine (1) to self-propulsion; (ii) removing HC adsorptively from the cool exhaust gas produced during initial self-propulsion; (iii) when, after initial self-propulsion, desorption of HC takes place, supplying hot air by way of the air injection means (8), whereby to heat the gas to a temperature at which the TWC (7) will be active, and continuing the hot air supply until HC has become substantially desorbed; and (iv) feeding the resulting air-conditioning gas to the TWC (7), **characterised in that** the system further comprises means for additional air injection (3) into the exhaust gas shortly after leaving the engine (1) whereby the mixture consisting of the gas and the additional injected air reacts over a gas conversion catalyst (4); and the exhaust gas is further contacted with a low-light-off oxidation catalyst (6) located between air-injection point (iii, 8) and the TWC (7).

8. A system according to claim 7, wherein the means for operating the heated air supply is operably associated with means for sensing the temperature of the HC trap (5) and/or the TWC (7) and optionally stops the supply of heated air when it is determined that the TWC (7) is at or above HC light-off temperature.

9. A system according to claim 7 or 8, including control means for beginning step (iii) about 10 seconds after cranking and/or for ending step (iii) at up to one minute after cranking.

10. A system according to any of claims 7 to 9, including control means for starting the engine (1) with excess fuel and spark retard and making the additional air injection into the engine exhaust manifold (2).

11. A system according to any of claims 7 to 10, wherein at least one of the catalysts and absorbent is/are supported on a thin metal foil flowthrough substrate having cell density in the range approx 62 - 248 cells/cm² (400 - 1600 cpsi).

12. A system according to any of claims 7 to 11, wherein the oxidation catalyst (6) comprises palladium.

13. A system according to any of claims 7 to 12, wherein the hot air is provided by way of an electric resistance heater (9), optionally of heater capacity from 500 to 1000W, powered by an engine alternator.

14. An engine (1) including an exhaust gas treatment system according to any of claims 7 to 13.

## Patentansprüche

1. Verfahren zum Betreiben eines Benzinmotors (1), der eine Abgasbehandlung aufweist, die ein Kaltstartverfahren einschließt, das die Stufen umfasst von: (i) Ankurbeln des Motors (1) zu einem Selbstantrieb; (ii) adsorptives Entfernen von Kohlenwasserstoff (KW) aus dem kühlen Abgas, das erzeugt wird während des anfänglichen Selbstantriebs; (iii) wenn nach dem anfänglichen Selbstantrieb eine Desorption von KW beginnt, Einspeisen von heißer Luft zu dem Gas, das desorbierten KW enthält, um **dadurch** das Gas auf eine Temperatur zu erwärmen, bei der ein nachgeschalteter Drei-Weg-Katalysator (TWC, 7) wirksam wird, und Fortsetzen des Einspeisens von heißer Luft bis der KW im Wesentlichen desorbiert worden ist; und (iv) Zuführen des erhaltenen Luft enthaltenden Gases zu dem TWC (7), **gekennzeichnet durch** Injizieren von Luft zusätzlich in das Abgas kurz nach einem Verlassen des Motors (1) und Umsetzen des erhaltenen Gemischs über einem Gasumwandlungskatalysator (4); und zwischen den Stufen (iii) und (iv) Kontaktieren des Gases mit einem Niedrig-Light-Off-Oxidationskatalysator (6).

2. Verfahren nach Anspruch 1, wobei das Einspeisen von erwärmter Luft ausreichend ist, um die Temperatur des Abgases, das den TWC (7) kontaktiert, um von 30 bis 60°C zu erhöhen.

3. Verfahren nach Anspruch 1 oder 2, das zusätzlich ein Abschalten des Einspeisens von erwärmter Luft umfasst, wenn der TWC (7) bei oder oberhalb der KW-Light-Off-Temperatur ist.

4. Verfahren nach einem beliebigen vorstehenden Anspruch, das zusätzlich nur ein Erwärmen der eingespeisten Luft umfasst, um heiße Luft zu erzeugen, nachdem der Motor (1) gestartet worden ist.

5. Verfahren nach einem beliebigen vorstehenden Anspruch, das zusätzlich ein Beginnen der Stufe (iii) etwa 10 s nach dem Ankurbeln und/oder ein Beenden der Stufe (iii) bis zu 1 min nach dem Ankurbeln umfasst.

6. Verfahren nach einem beliebigen vorstehenden Anspruch, das zusätzlich ein Starten des Motors (1) mit überschüssigem Treibstoff und Funkenverzögerung und ein Durchführen der zusätzlichen Luftinjektion in den Motorabgaskrümmer (2) umfasst.

7. Abgassystem für einen Benzinmotor (1), wobei das System in Reihenfolge umfasst: eine adsorptive Falleneinrichtung (5), die im Stande ist, KW aus dem Gas zu entfernen; eine Einrichtung für eine Heißluftinjektion (8) nachgeschaltet zu der Falle (5); und einen Drei-Weg-Katalysator (TWC, 7), und das ein Motormanagement aufweist, das programmiert ist für ein Kaltstartverfahren, umfassend (i) Ankurbeln des Motors (1) zu einem Selbstantrieb; (ii) adsorptives Entfernen von KW aus dem kühlen Abgas, das erzeugt wird während des anfänglichen Selbstantriebs; (iii) wenn nach dem anfänglichen Selbstantrieb eine Desorption von KW beginnt, Einspeisen von heißer Luft durch die Einrichtung für die Luftinjektion (8), um **dadurch** das Gas auf eine Temperatur zu erwärmen, bei welcher der Drei-Weg-Katalysator (TWC, 7) wirksam wird, und Fortsetzen des Einspeisens von heißer Luft bis der KW im Wesentlichen desorbiert worden ist; und (iv) Zuführen des erhaltenen Luft-regelnden Gases zu dem TWC (7), **dadurch gekennzeichnet, dass** das System zusätzlich eine Einrichtung umfasst für eine zusätzliche Luftinjektion (3) in das Abgas kurz nach einem Verlassen des Motors (1), wobei das Gemisch, bestehend aus dem Gas und der zusätzlich injizierten Luft, über einem Gasumwandlungskatalysator (4) reagiert; und das Abgas ferner kontaktiert wird mit einem Niedrig-Light-Off-Oxidationskatalysator (6), der zwischen einem Luft-Injektionspunkt (iii, 8) und dem TWC (7) angeordnet ist.

8. System nach Anspruch 7, wobei die Einrichtung zum Betreiben der erwärmten Lufteinspeisung durchführbar verbunden ist mit einer Einrichtung zum Fühlen der Temperatur der KW-Falle (5) und/oder des TWC (7) und gegebenenfalls Stoppen des Einspeisens von erwärmter Luft, wenn festgestellt worden ist, dass der TWC (7) bei oder oberhalb der KW-Light-Off-Temperatur ist.

9. System nach Anspruch 7 oder 8, das eine Steuereinrichtung einschließt für ein Beginnen der Stufe (iii) etwa 10 s nach dem Ankurbeln und/oder ein Beenden der Stufe (iii) bei bis zu 1 min nach dem Ankurbeln.

10. System nach einem der Ansprüche 7 bis 9, das eine Steuereinrichtung einschließt zum Starten des Motors (1) mit überschüssigem Treibstoff und Funkenverzögerung und ein Durchführen der zusätzlichen Luftinjektion in den Motorabgaskrümmer (2).

11. System nach einem der Ansprüche 7 bis 10, wobei mindestens einer der Katalysatoren und ein Absorptionsmittel getragen wird/werden auf einem dünnen Metallfoliendurchflusssubstrat, das eine Zellendichte aufweist in dem Bereich von etwa 62 bis 248 Zellen/cm² (400 bis 1600 cpsi).

12. System nach einem der Ansprüche 7 bis 11, wobei der Oxidationskatalysator (6) Palladium umfasst.

13. System nach einem der Ansprüche 7 bis 12, wobei die heiße Luft bereitgestellt wird durch einen elektrischen Widerstandsheizer (9), gegebenenfalls mit einer Heizkapazität von 500 bis 1000 Watt, angetrieben durch einen Motorgenerator oder eine Lichtmaschine.

14. Motor (1), der ein Abgasbehandlungssystem nach einem der Ansprüche 7 bis 13 einschließt.

## Revendications

1. Procédé de fonctionnement de moteur à essence (1) ayant un traitement de gaz d'échappement comportant une procédure de démarrage à froid comprenant les étapes consistant à : (i) mettre le moteur (1) en marche jusqu'à l'auto-propulsion ; (ii) éliminer par adsorption les hydrocarbures (HC) du gaz d'échappement froid produit au cours de l'auto-propulsion initiale ; (iii) lorsque, après l'auto-propulsion initiale, la désorption d'HC commence, fournir de l'air chaud au gaz contenant les HC désorbés, pour ainsi chauffer le gaz jusqu'à une température à laquelle un catalyseur à trois voies TWC (7) se trouvant en aval sera actif, et continuer l'alimentation en air chaud jusqu'à ce que les HC soient sensiblement désorbés ; et (iv) fournir le gaz résultant contenant de l'air au TWC (7), **caractérisé par** les étapes consistant à injecter de l'air supplémentaire dans le gaz d'échappement peu de temps après avoir quitté le moteur (1) et faire réagir le mélange résultant sur un catalyseur de conversion gazeuse (4) ; et, entre les étapes (iii) et (iv), mettre le gaz en contact avec un catalyseur à oxydation à allumage bas (6).

2. Procédé selon la revendication 1, dans lequel l'alimentation en air chauffé est suffisante pour augmenter la température des gaz d'échappement entrant en contact avec le TWC (7) selon un éventail allant de 30 à 60°C.

3. Procédé selon la revendication 1 ou 2, comprenant en outre l'étape consistant à arrêter l'alimentation en air chauffé lorsque le TWC (7) est à ou au-dessus de la température d'allumage d'HC.

4. Procédé selon l'une quelconque des revendications précédentes, comprenant en outre l'étape consistant à chauffer seulement l'air fourni pour produire de l'air chaud après que le moteur (1) a été démarré.

5. Procédé selon l'une quelconque des revendications précédentes, comprenant en outre l'étape consistant à commencer l'étape (iii) environ 10 secondes après la mise en marche et/ou terminer l'étape (iii) jusqu'à une minute après la mise en marche.

6. Procédé selon l'une quelconque des revendications précédentes, comprenant en outre les étapes consistant à démarrer le moteur (1) avec un excès de carburant et retard à l'allumage et à réaliser l'injection d'air supplémentaire dans la tubulure d'échappement (2) du moteur.

7. Système d'échappement pour moteur à essence (1), lequel système comprenant, dans l'ordre : des moyens capteurs par adsorption (5) capables d'éliminer les HC du gaz ; des moyens pour l'injection d'air chaud (8) en aval du capteur (5) ; et un catalyseur à trois voies TWC (7) et comportant une gestion de moteur programmée pour une procédure de démarrage à froid comprenant les étapes consistant à (i) mettre le moteur (1) en marche jusqu'à l'auto-propulsion ; (ii) éliminer par adsorption les HC du gaz d'échappement froid produit au cours de l'autopropulsion initiale ; (iii) lorsque, après l'autopropulsion initiale, la désorption d'HC a lieu, fournir de l'air chaud par le biais des moyens d'injection d'air (8), pour ainsi chauffer le gaz jusqu'à une température à laquelle le TWC (7) sera actif, et continuer l'alimentation en air chaud jusqu'à ce que les HC soient sensiblement désorbés ; et (iv) fournir le gaz résultant contenant de l'air au TWC (7), **caractérisé en ce que** le système comprend en outre des moyens pour l'injection d'air supplémentaire (3) dans le gaz d'échappement peu de temps après avoir quitté le moteur (1) moyennant quoi le mélange constitué du gaz et l'air injecté supplémentaire réagit sur un catalyseur de conversion gazeuse (4) ; et le gaz d'échappement est en outre mis en contact avec un catalyseur à oxydation à allumage bas (6) positionné entre le point d'injection d'air (iii, 8) et le TWC (7).

8. Système selon la revendication 7, dans lequel les moyens pour l'actionnement de l'alimentation en air chauffé sont associés de façon opérationnelle à des moyens pour détecter la température du capteur d'HC (5) et/ou au TWC (7) et arrêtent facultativement l'alimentation en air chauffé lorsqu'il est déterminé que le TWC (7) est à ou au-dessus de la température d' allumage d'HC.

9. Système selon la revendication 7 ou 8, comprenant des moyens de commande pour commencer l'étape (iii) environ 10 secondes après la mise en marche et/ou pour terminer l'étape (iii) jusqu'à une minute après la mise en marche.

10. Système selon l'une quelconque des revendications 7 à 9, comprenant des moyens de commande pour démarrer le moteur (1) avec un excès de carburant et retard d'allumage et réaliser l'injection d'air supplémentaire dans la tubulure d'échappement (2) du moteur.

11. Système selon l'une quelconque des revendications 7 à 10, dans lequel au moins un des catalyseurs et adsorbant est/sont supportés sur un substrat d'écoulement en feuille métallique mince ayant une densité cellulaire dans la plage approximative de 62 à 248 cellules/cm² (400 à 1600 cpsi).

12. Système selon l'une quelconque des revendications 7 à 11, dans lequel le catalyseur à oxydation (6) comprend du palladium.

13. Système selon l'une quelconque des revendications 7 à 12, dans lequel l'air chaud est fourni par le biais d'une résistance électrique chauffante (9), ayant facultativement une capacité calorifique de 500 à 1000 W, alimentée par un alternateur de moteur.

14. Moteur (1) comprenant un système de traitement de gaz d'échappement selon l'une quelconque des revendications 7 à 13.
